# EUROPÄISCHE PATENTSCHRIFT

(11) **EP 1 034 876 B1**
(45) Veröffentlichungstag und Bekanntmachung des Hinweises auf die Patenterteilung: **22.05.2002**
(21) Anmeldenummer: 99200370.7
(22) Anmeldetag: 10.02.1999
(51) Int. Cl.: B23P 15/24, B44B 5/02, B30B 5/04

(54) **Verfahren zur Herstellung eines mit einem Prägemuster versehenen endlosen Stahlbands**
Process for manufacturing an endless metallic strip provided with an embossed pattern
Procédé de fabrication de bandes métalliques sans fin pourvues d'un motif repoussé

(43) Veröffentlichungstag der Anmeldung: 13.09.2000
(73) Patentinhaber: BERNDORF BAND GesmbH, 2560 Berndorf (AT)
(72) Erfinder: Werthmann, Wilfried, 47807 Krefeld (DE)
(74) Vertreter: Ackmann, Günther, Dr.-Ing.

(56) Entgegenhaltungen:
- EP-A- 0 031 613
- EP-A- 0 172 947
- WO-A-90/09865
- WO-A-92/19461
- DE-A- 1 939 603
- DE-A- 2 509 865
- DE-A- 4 134 976

## Beschreibung

Die Erfindung betrifft ein Verfahren zur Herstellung eines mit einem Prägemuster versehenen endlosen Stahlbands zur kontinuierlichen Produktion von Preßlaminaten, wobei das Stahlband strukturiert, poliert, mattiert und hartverchromt wird.

Preßlaminate in der Art kunststoffbeschichteter Hartfaserplatten und dergleichen finden im Möbelbau oder in der Raumausstattung Verwendung und sind in der Regel mit einer in die Oberfläche eingeprägten, beliebig gemusterten Strukturierung versehen. Die Herstellung solcher Preßlaminate geschieht mit Hilfe von Prägewerkzeugen. Nach einem Verfahren wird ein Vorprodukt zwischen zwei in entgegengesetzten Drehrichtungen umlaufenden Endlosbändern gepreßt, wobei das die Oberfläche des Preßlaminats beaufschlagende Endlosband eine Prägestrukturierung aufweist. Die Erfindung befaßt sich mit der Herstellung dieser endlosen Stahlbänder. Die Stahlbänder sind quer oder diagonal zur Laufrichtung verschweißt. Im Bereich der Schweißnaht kann jedoch eine gleichmäßige Strukturierung nur in aufwendiger Weise geschaffen werden. Bei einer aus der EP 0031613 A1 bekannten Ausführung die dem nächstkommenden Stand der Technik entspricht, ist das Stahlband mit einer relativ dicken Kupferschicht von etwa 50 bis 300 um versehen. Bei dieser Herstellungsmethode wird die Kupferschicht im Ätzverfahren strukturiert, poliert, mechanisch mattiert und hartverchromt. Diese Ausführung hat den Vorteil, daß vor dem Mattieren, das in der Regel durch Sandbestrahlung erfolgt, eine optimale Hochglanzpolitur geschaffen werden kann. Nachteilig ist jedoch neben dem hohen Kupferverbrauch, daß die beschichteten Stahlbänder sehr anfällig gegenüber Dehnungen sind. Bekannt ist aus der EP 0113813 A2 weiterhin ein Stahlband, bei dem die Struktur mittels Ätzverfahren unmittelbar in die Bandoberfläche eingearbeitet wird, woraufhin die strukturierte Bandoberfläche poliert, mattiert und hartverchromt wird. Bei dieser Ausführung besteht das Band aus einer aufwendigen Legierung, die nach dem Verschweißen zu einem Endlosband in einem besonderen Verfahren ausgehärtet wird. Nach dem Ätzen sollen die Oberflächen hochglanz poliert werden, um sie dann durch Sandbestrahlung auf den gewünschten Glanzgrad zu mattieren. Nachteilig ist bei dieser Ausführung, daß sich die Stahlbänder nach der Strukturierung nur sehr schwer gleichmäßig polieren lassen. Die durch Ätzung rauhe Stahloberfläche läßt eine gute mechanischen Politur weder in den Vertiefungen, noch auf den Strukturerhöhungen zu. Bei dem Versuch, einen gleichmäßigeren Glanzgrad durch ein verstärktes Polieren zu erhalten, besteht die Gefahr, daß die Strukturerhöhungen abgetragen und verändert werden. Weiterhin bleibt auch der Schweißbereich mehr oder weniger sichtbar. Diese Ausführung ist jedoch weniger anfällig gegenüber Dehnungen.

Der Erfindung liegt die Aufgabe zugrunde, ein entsprechend dem Oberbegriff des Anspruchs 1 ausgebildetes Stahlband mit einer gleichmäßigeren Oberflächenmattierung zu versehen und es gegenüber Dehnungen widerstandsfähiger zu machen.

Diese Aufgabe wird erfindungsgemäß durch die im Kennzeichen des Anspruchs 1 angegebenen Merkmale gelöst.

Bei diesem Verfahren wird die Strukturierung und die Naht des Stahlbandes durch die dünne Nickel und/oder Kupferschicht abgedeckt. Die Metallschicht kann dann in optimaler Weise über die gesamte Bandoberfläche gleichmäßig auf Hochglanz poliert werden, so daß anschließend auch eine gleichmäßige Mattierung in dem gewünschten Mattierungsgrad möglich ist. Das schließlich hartverchromte Stahlband hat weiterhin den Vorteil, daß es gegenüber der in EP 0113813A2 beschriebenen Ausführung weniger anfällig gegenüber Dehnungen ist, als ein mit einer wesentlich dickeren Kupferschicht versehenes und danach strukturiertes Stahlband.

Das Stahlband kann vor der Beschichtung mit Nickel und/oder Kupfer und einer entsprechenden Vorbereitung auf übliche Weise durch Ätzgravur strukturiert werden, wobei die Ätzgravur ein- oder mehrfach angewendet werden kann. Das erfindungsgemäß mit einer Metallschicht versehene und polierte Stahlband wird zweckmäßig mechanisch durch Sandstrahlen mattiert.

Ein Ausführungsbeispiel der Erfindung ist in der Zeichnung dargestellt; es zeigt
- Fig. 1: eine aus zwei Stahlbändern bestehende kontinuierlich arbeitende Preßeinrichtung,
- Fig. 2: das in Fig. 1 gezeigte Stahlband in einer Draufsicht und
- Fig. 3: den Gegenstand der Fig. 2 in einem durch den oberen Trumm führenden Schnitt in einem stark vergrößertem Maßstab.

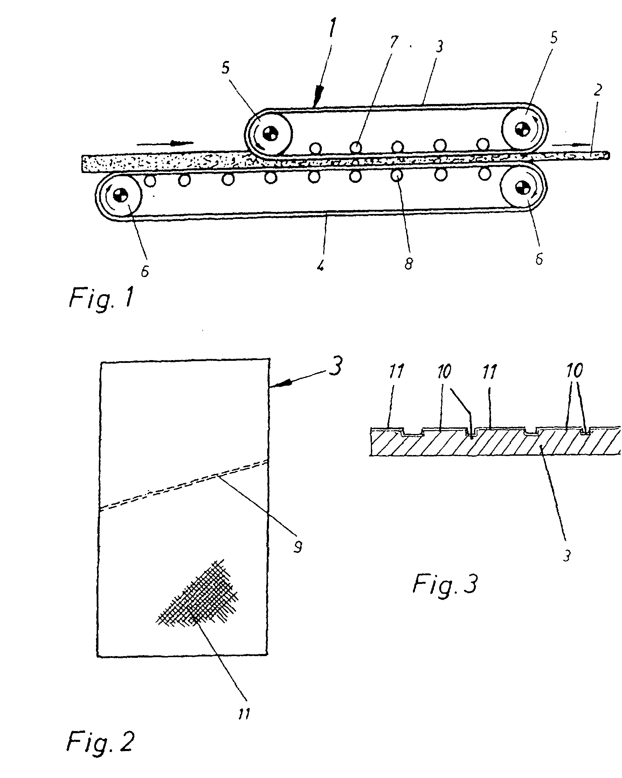

Die in Fig. 1 schematisch dargestellte Preßeinrichtung 1 besteht im wesentlichen aus zwei motorisch synchron angetriebenen endlosen Stahlbändern 3,4, die über jeweils zwei Walzen 5 bzw. 6 laufen und mit Stützwalzen 7 bzw. 8 versehen sind. Das am freien Ende des unteren Stahlbandes 4 zugeführte Vorprodukt, z. B. mit einem Kunstharz getränkte Fasern aus Holz, Glas o. dgl., auf das auch eine für eine harte Schutzschicht bestimmte Kunststoffmasse aufgerakelt sein kann, wird zwischen den beiden in entgegengesetzten Drehrichtungen umlaufenden Stahlbändern zu einem Preßlaminat 2 gepreßt. Das obere Stahlband 3 ist durch Ätzgravur mit einer Struktur 10 versehen, welche bei der Fertigung und Oberflächenbehandlung in die Oberfläche des Preßlaminats 2 eingeprägt wird. Die Stahlbänder 3,4 bestehen aus einer zugfesten Stahlsorte, es kann auch ein rostfreier Stahl sein, mit einer Bandbreite, die wahlweise zwischen 1000 und 3000 mm liegen kann. Die Banddicke liegt je nach den Bandabmessungen zwischen 0,5 und 3 mm. Die beiden Enden des Bandes sind, wie Fig. 2 zeigt, unter Bildung des endlosen Stahlbandes 3 entlang einer quer bzw. diagonal verlaufenden Schweißnaht 9 zusammengeschweißt. Diese Schweißnaht ist in üblicher Weise planeben geschliffen und poliert. Das Stahlband 4 ist gleichermaßen ausgebildet.

Das vorbereitete endlose Stahlband 3 wird in üblicher Weise durch Ätzgravur mit einer Struktur versehen. Dabei kann die Ätzgravur mehrfach angewendet werden, um beispielsweise eine eher richtungslose Oberflächenstruktur zu erzielen. Die strukturierte Oberfläche des Stahlbandes 3 wird anschließend mit einer dünnen Kupferschicht oder einer dünnen Nikkelschicht von etwa 10 bis 20 µm versehen. Diese Schicht deckt die gesamte Oberflächenstruktur ab und ist dabei so dünn, daß die Struktur voll erhalten bleibt. Die dünne Metallschicht, insbesondere eine Kupferschicht ist sehr gut polierfähig, so daß beim Polieren eine gleichmäßige Hochglanzpolitur geschaffen wird. Danach wird die polierte Oberfläche mattiert, vorzugsweise durch Sandstrahlen. Durch die Dauer und/oder Intensität sowie die Art des Strahlmittels können beliebige Mattierungsgrade erhalten werden. Die gleichmäßige Politur ermöglicht eine ebenfalls gleichmäßige Mattierung. Die mattierte Bandoberfläche wird zweckmäßig noch mit einer Hartverchromung versehen, welche eine hohe Abriebsfestigkeit ergibt. Wahlweise kann auch ein Mattieren auf Chrom nach einer Anchromung erfolgen.

Die Metallschicht besteht vorzugsweise aus einer Kupferschicht oder einer Nickelschicht. Je nach den Anforderungen können auch zwei oder mehr Kupfer- und/oder Nickelschichten aufgetragen werden.

### Bezugszeichenliste

- 1: Preßeinrichtung
- 2: Preßlaminat
- 3: Endlosbänder
- 4: Endlosbänder
- 5: Walzen
- 6: Walzen
- 7: Stützwalzen
- 8: Stützwalzen
- 9: Schweißnaht
- 10: Struktur
- 11: Kupfer- oder Nickelschicht

## Patentansprüche

1. Verfahren zur Herstellung eines mit einem Prägemuster versehenen endlosen Stahlbands zur kontinuierlichen Produktion von Preßlaminaten wobei das Stahlband strukturiert, poliert, mattiert und hartverchromt wird, **dadurch gekennzeichnet, daß** das strukturierte Stahlband vor dem Polieren mit einer dünnen Metallschicht, vorzugsweise einer Nickel- und/oder Kupferschicht, von 10 bis 20 µm versehen wird.

2. Verfahren nach Anspruch 1, **dadurch gekennzeichnet, daß** zwei oder mehr dünne Metallschichten aufgebracht werden.

3. Verfahren nach Anspruch 1 oder 2, **dadurch gekennzeichnet, daß** das Stahlband durch Ätzgravur strukturiert wird.

4. Verfahren nach einem der Ansprüche 1 bis 3, **dadurch gekennzeichnet, daß** das mit einer Kupferschicht versehene und polierte Stahlband durch Sandstrahlen mattiert wird.

## Claims

1. A method for manufacturing an endless steel band that is provided with an embossed pattern and used in the continuous production of pressed laminates, wherein the steel band is structured, polished, dimmed and hard-chrome plated, **characterized by** the fact that the structured steel band is provided with a thin metallic layer, preferably a nickel and/or copper layer, that has a thickness between 10 and 20 µm before the polishing process.

2. The method according to Claim 1, **characterized by** the fact that two or more thin metallic layers are applied.

3. The method according to Claim 1 or 2, **characterized by** the fact that the steel band is structured by means of etch-engraving.

4. The method according to one of Claims 1 - 3, **characterized by** the fact that the steel band is dimmed by means of sand blasting after it was provided with a copper layer and polished.

## Revendications

1. Procédé pour la fabrication d'un ruban d'acier sans fin pourvu d'un dessin gaufré pour la production en continu de laminés de presse, le ruban d'acier étant structuré, poli, dépoli et chromé à dur, **caractérisé en ce que** le ruban d'acier structuré est pourvu avant polissage d'une mince couche métallique, de préférence une couche de nickel et/ou de cuivre de 10 à 20 µm.

2. Procédé selon la revendication 1, **caractérisé en ce que** deux couches métalliques minces ou plus sont appliquées.

3. Procédé selon la revendication 1 ou 2, **caractérisé en ce que** le ruban d'acier est structuré par gravure au pointillé.

4. Procédé selon une des revendications 1 à 3, **caractérisé en ce que** le ruban d'acier muni d'une couche de cuivre et poli est dépoli par sablage.
